# EUROPEAN PATENT SPECIFICATION

(11) **EP 2 846 575 B1**
(45) Date of publication and mention of the grant of the patent: **18.07.2018**
(21) Application number: 13290213.1
(22) Date of filing: 09.09.2013
(51) Int. Cl.: H04W 16/18, H04W 24/02, H04W 36/00, H04W 92/20

(54) **Method for Installing a base station in a mobile communication system**
Verfahren zur Installation einer Basisstation in einem mobilen Kommunikationssystem
Procédé pour installer une station de base dans un système de communication mobile

(43) Date of publication of application: 11.03.2015
(73) Proprietor: Alcatel Lucent, 91620 Nozay (FR)
(72) Inventor: Klein, Siegfried, 70469 Stuttgart (DE); Kühn, Edgar, 70563 Stuttgart (DE); Ewe, Lutz, 70469 Stuttgart (DE); Bakker, Hajo, 71735 Eberdingen (DE)
(74) Representative: Wetzel, Emmanuelle

(56) References cited:
- EP-A1- 2 009 941
- WO-A1-96/35305
- US-A- 6 167 272

## Description

### Technical Field

The disclosure relates to telecommunication systems, and more particularly to a method for installing a base station in a mobile communication system.

### Background

In mobile telecommunications, base stations are used to increase the capacity of cellular networks at places with demand for broadband communication. However, base station deployment is expensive for various reasons. Thus, reducing the risk of positioning a base station to an unfavorable position becomes necessary.

US 6167272 A1 discloses a computer-aided method for testing the mobile radio network.

EP 2009941 A1 discloses a method of adjusting the position of a picocell base station having at least one associated preferred user terminal.

WO 96/35305 A1 discloses a method in a cellular communications system having a plurality of cells, each cell being served by at least one of a plurality of existing base stations.

### Summary

Various embodiments provide for an improved method in a mobile communication system, an improved computer program product, an improved communication system and improved communication devices as described by the subject matter of the independent claims. Advantageous embodiments are described in the dependent claims. The embodiments and/or examples of the following description which are not covered by the appended claims are considered as not being part of the present invention. Some embodiments provide a method for installing a base station in a mobile communication system comprising a serving base station. The method comprises:
a. providing a first and second communication device, wherein the first communication device is configured for broadcasting data, wherein the second communication device is configured for receiving data from the serving base station, wherein the first and second communication devices are installed in a first and second installation area relative to the serving base station respectively. The configuration of the first and second communication device may be a minimal configuration necessary for broadcasting and receiving data like the base station respectively. The first communication device may be installed such that its cell coverage area may be at least partially overlapping with a cell coverage area served by the serving base station, while the second communication device may be installed in a geographical area of the cell served by the serving base station. The base station to be installed may be a small base station such as a pico evolved Node B (eNB) serving a small cell. In another example, the base station to be installed may be a macro base station such as an eNB serving a macro cell.
   The method further comprises
b. receiving, by the serving base station, a measurement report message from a mobile station being served by the serving base station and, for example, moving toward the first communication device, wherein the measurement report message comprises measurements by the mobile station on the broadcasted data. The mobile station may communicate with the serving base station through the air interface. The serving base station may use the measurement report message to determine a cell served by the second communication device as a target cell for handover.
c. evaluating, by the serving base station, the measurements and making a handover decision towards the second communication device, thereby sending a handover request to the second communication device;
d. upon receiving the handover request from the serving base station incrementing at the second communication device a first number of received handovers and rejecting the handover request;
e. determining the first installation area for installing the base station based on the first number of handovers obtained during a predefined time period.

These features may be advantageous as they may provide an efficient method for finding an optimal installation area of a base station within the mobile communication system. This may increase the capacity of the communication system by servicing more users and providing additional services to overcome poor quality of service (QoS) that may result in these environments due to non-optimal placement of the base station. This may also maintain a continuous and QoS-guaranteed service.

Another advantage may be provided in that resources may be saved that would otherwise be required when performing multiple attempts of installation of the base station. This is because, the base station as e.g. eNB handles all radio, baseband and control functions, and consist of voluminous antennas with electronic systems requiring considerable spatial installation volume.

The fact of splitting the functions between the first and second communication device may prevent technical constraints on both devices, that would otherwise be required when using a single device to perform the whole function. In addition, since the first communication device is a transmitter device only, it may be configured without an operating X2/S1-Interface, which means that the installation of the first communication device may not require all the cablings e.g. a fiber or coax cable connections to a Mobility Management Entity (MME). Such cabling connections may be required for the base station to be installed. This may simplify the installation of the first communication device in multiple positions or installation areas in order to find the optimal position.

Another advantage may be that the present method may be seamlessly integrated in the existing systems.

According to one embodiment, the method further comprises providing the first communication device as a first test base station comprising a transmitter for broadcasting the data in a first frequency band, wherein the transmitter characteristics of the first test base station comprise at least part of the transmitter characteristics of the base station to be installed. This may be advantageous as it may provide reliable test results by using a similar transmission configuration as the base station to be installed.

The first frequency band may be for example the same as the frequency band of the serving base station. Alternatively, the first frequency band may be different from the frequency band of the serving base station.

The first communication device may be operable to at least: generate a radio frequency (RF) carrier, combine it with a baseband signal into a RF signal through modulation, and radiate the resultant signal in the form of modulated radio wave.

The first test base station may be limited in its functionality and may include a transmitter for transmitting the data in a broadcast control channel. The antenna and transmitter output power of the first test base station may be chosen to achieve the same coverage as the base station to be installed. The first test base station may be intended to transmit data and not to facilitate communications within a cellular network of the telecommunication system.

According to one embodiment, the method further comprises providing the second communication device as a second test base station that is physically connected to the serving base station through a backhaul network.

The second test base station may be limited in its functionality and may include a receiver for receiving handover requests from the serving base station. The second test base station may be intended to receive handover requests and not to facilitate communications within the cellular network of the telecommunication system.

According to one embodiment, the broadcasted data is indicative of at least one of a Physical Cell ID, PCI, and a E-UTRAN cell Global ID, ECGI, of a first cell served by the first communication device.

According to one embodiment, the method further comprises determining, by the serving base station, a signaling channel to the second communication device; and establishing the X2 interface between the serving base station and the second communication device using the determined signaling channel, wherein the second communication device is configured for receiving the handover request over the X2 interface.

According to one embodiment, the signaling channel is determined using a neighbor cell list of the serving base station, wherein the neighbor cell list comprises an indication of the signaling channel to the second communication device in association with the PCI of the first cell.

For example, the serving base station may comprise a data structure storing different PCI values in association with one or more signaling channel identifiers. Upon receiving the PCI information from the mobile station, the serving base station may read the data structure and search for an entry corresponding to the received PCI, and therefrom determining the signaling channel.

The neighboring cell list information may be provided by a user of the second communication device.

According to one embodiment, determining the signaling channel comprises: sending, by the serving base station, a request to a network element of the mobile communication system for obtaining an identifier of a target base station for the handover, wherein the request is indicative of the ECGI of the first cell; receiving, by the serving base station, an indication of the signaling channel to the second communication device corresponding to the ECGI.

The network element comprises a mobility management entity (MME).

According to one embodiment, the method further comprises repeating steps b) to d) for a third installation area in which the first communication device is installed, resulting in a second number of received handovers; wherein determining the installation area further comprises comparing the first number of handovers with the second number of handovers during the predefined time period and determining one of the first installation area and the third installation area based on the comparison result.

This may be done for more than two installation areas in which the first communication device may be installed and the number of handovers may be counted for each different installation area.

In another example, the first number of handovers may be compared with a predetermined threshold value, and based on the result of the comparison, the first installation area may be selected or not for installing the base station. The threshold value may be determined, for example, using simulation or empirical data indicative of the expected number of handovers during predefined the time period.

According to one embodiment, the method further comprises determining signal quality of each received handover request, ranking the first number of handovers using the signal quality, wherein in case more than 90% of the users have a signal quality of higher than a predefined maximum signal quality selecting the installation area.

According to one embodiment, the first number of handovers is incremented for different mobile stations. This may avoid counting the number of multiple handovers triggered by a single mobile station during the predefined time period.

Various embodiments relate to a communication system comprising:
- a first communication device for broadcasting data;
- a serving base station adapted for:
   ▪ receiving a measurement report message from a mobile station being served by the serving base station and for example moving toward the first communication device, wherein the measurement report message comprises measurements on the broadcasted data performed by the mobile station;
   ▪ evaluating the measurements and making a handover decision towards the second communication device; and
   ▪ sending a handover request to the second communication device.
- a second communication device adapted for
   ▪ receiving the handover request from the serving base station
   ▪ incrementing a first number of received handovers; and
   ▪ rejecting the handover request;
wherein the first and second communication devices are installed in a first and second installation area relative to the serving base station respectively, and
- a control unit for determining an installation area as the first installation area for installing the base station based on the first number of handovers obtained during a predefined time period.

Various embodiments relate to a usage of a first communication device in the communication system of the above embodiment comprising a transmitter for broadcasting the data.

Various embodiments relate to usage of a second communication device in the communication system of the above embodiment comprising a receiver for receiving the handover request from the serving base station of the communication system; incrementing the first number of the received handovers; and rejecting the handover request.

According to one embodiment, the usage of the second communication device, further comprises receiving information indicative of the serving base station and establishing an X2 connection with the serving base station using the received information.

The information may be received from a user of the second communication device. This may make configuration data of the second communication device such as the PCI of the first cell known to these serving base station.

Various embodiments relate to a computer program product comprising computer executable instructions to perform the method steps of the method of any one of the preceding embodiments.

It is understood that one or more of the aforementioned embodiments may be combined as long as the combined embodiments are not mutually exclusive.

### Brief description of the drawings

In the following embodiments of the invention are explained in greater detail, by way of example only, making reference to the drawings in which:
Fig. 1 illustrates a simplified structure of a communication system as part of a mobile telecommunication system,
Fig. 2 is a functional block diagram of the first and second test base station,
Fig. 3 is a signaling diagram illustrating a first exemplary process of counting handovers,
Fig.4 is a signaling diagram illustrating a second exemplary process of counting handovers, and
Fig. 5 is a flowchart for a method for installing a base station.

### Detailed description

In the following, like numbered elements in these figures are either similar elements or perform an equivalent function. Elements which have been discussed previously will not necessarily be discussed in later figures if the function is equivalent.

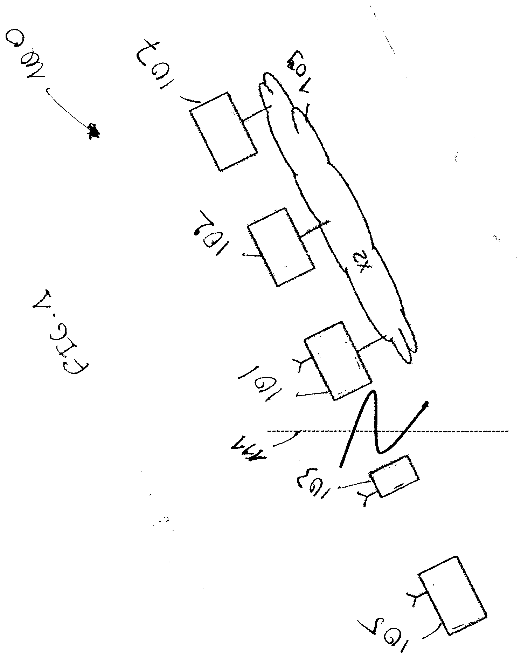

FIG. 1 shows a simplified structure of a communication system 100 as part of a mobile telecommunication system. By way of example, the mobile telecommunication system may be a Long Term Evolution (LTE) communication system.

The communication system 100 comprises a serving eNB 101. The serving eNB 101 is serving, within a first cell, a mobile station such as a user equipment (UE) 103. The communication system 100 further comprises a first and second test base station 105 and 107. The communication system 100 further comprises a MME 102 to establish signaling channels between base stations e.g. eNB 101 and second test base station 107 of the communication system 100. The first test base station 105 is installed in the communication system 100 such that its second cell coverage area is at least partially overlapping an area of a first cell covered by the serving eNB 101.

The second test base station 107 may be installed in the communication system 100 such that it can receive handover requests from the serving eNB 101. It may be installed, for example, as a neighboring base station of the eNB 101. The serving eNB 101 is physically connected to the second test base station 107 through an X2 backhaul network 109. The connection may be an optical fiber.

The first test base station 105 is configured to radiate pilot symbols and broadcast channel (BCH). The pilot symbols allow to extract the physical cell id (PCI) of the second cell, while the broadcast channel allows to extract the ECGI) of the second cell.

The UE 103 is communicating with the serving eNB 101 through an air interface 111 using wireless connections and transitioning to the second cell served by the first test base station 105. When the UE 103 is in an overlapping region where the first cell and second cell overlap, it may perform measurements on the broadcasted data of the first test base station 105 and sends the performed measurements to the serving eNB 101.

The second test base station 107 is configured to receive handover requests and collects the associated information of the handover request. The second test base station 107 is further configured to reject any handover request from the serving eNB 101. The collected information is evaluated at a later stage to verify the position of the first test base station 105. The position of the first test base station 105 may be changed multiple times in order to find an optimal position for installing a new "real" base station within the communication system 100.

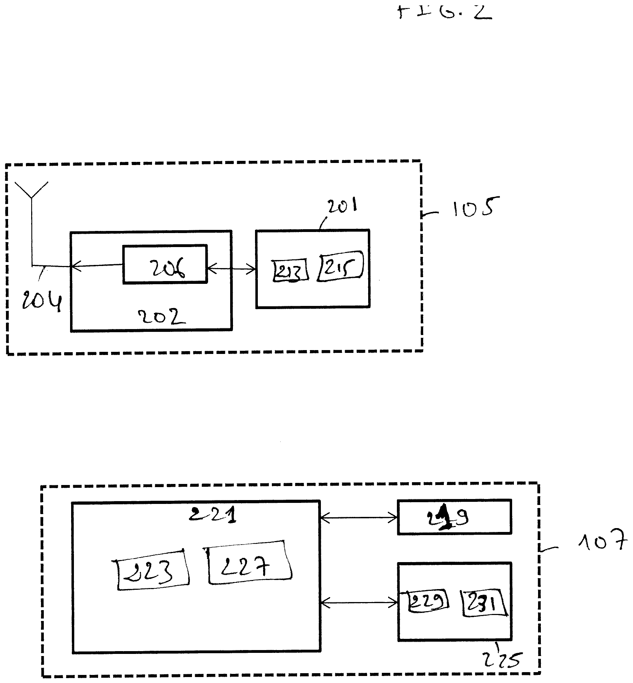

Fig. 2 is a functional block diagram of the first 105 and second 107 test base station.

The first test base station 105 is a transmitter only station. The first test base station 105 comprises a control unit 201, a radio communication unit 202. The radio communication unit 202 includes an antenna 204 and a transmitter 206. The transmitter 206 may comprise encoded information to be broadcasted. Such encoded information may be mapped onto a downlink synchronization signal or a transport channel e.g. for which resource elements may be already defined. The transmitter 206 may output a radio frequency signal to the antenna 204 after amplifying the radio frequency signal to a transmission output level. Such signal is broadcasted.

The control unit 201 is connected to the transmitter 206. The control unit 201 includes a CPU 213 and a memory 215. The CPU may perform various controls in conformity with a program stored in the memory 215. The various controls are the minimal control functions that the first test base station 105 may perform for transmitting data.

The transmitter 206 may have characteristics comprising at least part of the transmitter characteristics of the base station to be installed. For example, the first frequency band may be at least part of a frequency band of the transmitter of the serving eNB 101. The transmitter 206 may comprise at least one transmitter antenna connector.

The maximal output power of the transmitter 206 may be within +2 dB and -2dB of the output power of the base station to be installed. In another example, the maximal output power of the transmitter 206 may be different than the output power of the base station to be installed. For example, in certain installation areas where a lower output power may be sufficient to cover a cell coverage area overlapping with the serving eNB 101.

The first test base station is not configured with an operating X2/S1-Interface according to 3GPP standards, which would require a fiber or coax cable connection to the MME 102. Also, supplementary systems for power supply, air conditioning, etc. to be installed in close proximity of the first test base station 105 are not required.

The second test base station 107 is shown as containing a handover receiving unit 221, a second control unit 225 and a line interface 219. The line interface 219 may be an X2 interface. The handover receiving unit 221 includes a handover processing unit 223 and a neighbour cell list updating unit 227. The function of the handover processing unit 223 and the function of the neighbour cell list updating unit 227 are realized by the CPU 229 of the control unit 225.

The neighbour cell list unit 227 may receive neighbour cell list update information which is input for example by a user of the second test base station 107. The cell update information may comprise for example a cell such as the first cell belonging to the serving eNB 101. The neighbour cell list updating unit 227 may be further adapted to store a neighbor cell list in the memory 231 of the control unit 225. The handover receiving unit 221 may receive handover request messages from another bas station via the X2 interface; wherein the other base station is part of the neighbor list.

The minimal configuration of the first and second base station 105 and 107 as described above may facilitate the search of an installation area of a complete or "real" base station, and may save resources that would be otherwise required when installing the complete base station multiple times to find an optimal position.

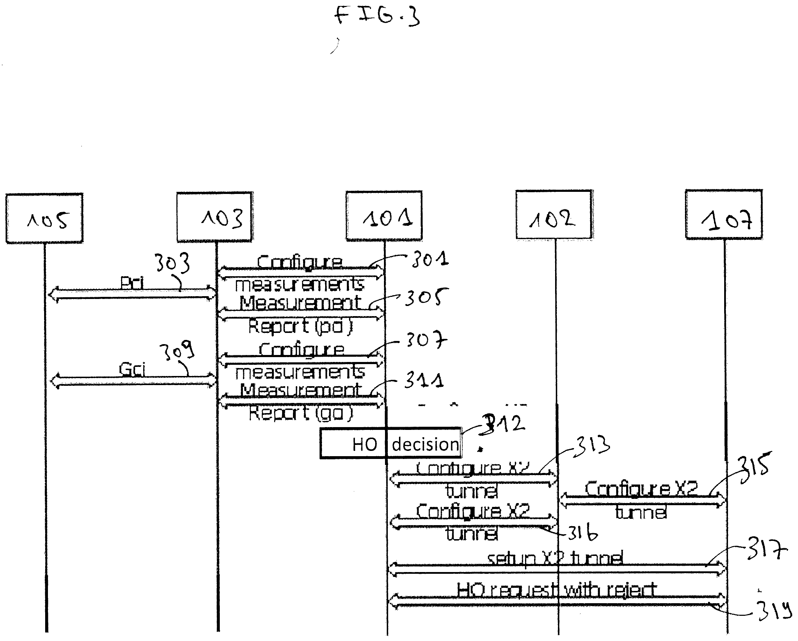

Fig. 3 is a signaling diagram illustrating a process of counting handovers toward the first test base station 105 of the communication system 100. The serving eNB 101 transmits measurement configuration information to the UE 103 (step 301). This may be done for example in an RRC Connection Request message. For example, the serving eNB 101 may configure the UE 103 to perform the PCI measurements using received signals from other base stations such as the first test base station 105. For example, the UE 103 may perform measurements of received signal strength and channel quality (RSRP and RSRQ). During the measurement, the PCI may be identified as it may be used to separate signals from different base stations. The UE 103 may perform PCI measurements on received data from the first test base station 105 (step 303). The UE 103 may send a measurement report indicative of the performed measurement (including the PCI of a first cell served by the first test base station 105) to the serving eNB (step 305). If the received PCI is not yet known to the serving eNB 101, the serving eNB 101 may configure the UE to measure the ECGI of the first test base station 105 (step 307). The UE 103 may perform ECGI measurements on received data from the first test base station 105 (step 309). The UE 103 may send a measurement report to the serving eNB 101 indicative of the measured ECGI (step 311). The serving eNB 101 comprises information according to which the received ECGI is associated with a signaling channel between the serving eNB 101 and the second test base station 107. The serving eNB 101 makes a handover decision based on the measurement report (step 312) toward . The serving eNB 101 may further trigger a X2 tunnel setup via the MME 102 to get the configuration data for the base station or eNB i.e. second test base station 107 associated with the received ECGI (step 313). The MME 102 identifies the target eNB using the ECGI obtained from the preceding measurement and involves it into the X2 tunnel setup procedure (step 315-316).

The X2 tunnel setup is concluded by the two endpoints setting up their individual X2 tunnel (step 317). The serving eNB 101 issues a handover request message to the second test base station 107 using the setup X2 tunnel, wherein the handover request is rejected from the second test base station 107 (319).

Upon receiving the handover request, the handover processing unit 223 may increment a number of received handovers. For example, at time t0, the number of received handovers is set to zero. During a predefined time period, e.g. one day (starting from t0) the number of received handovers is incremented by one as soon as a handover request is received from the serving eNB 101.

After this procedure is completed, the serving eNB 101 may associate the reported PCI to the second test base station 107 e.g. by adding an entry into the table containing the list of PCIs and associated base stations.

After obtaining the number of received handovers for that time period and for a given position or installation area where the first test base station 105 is installed, the method of Fig. 3 may be repeated for at least one other position of the first test base station 105 for the same predefined time period duration. At the end, the obtained numbers of handovers of respective positions of the first test base station 105 may be compared and, for example, the position associated with the highest number of handovers may be selected. The selected position may be then used for installing a complete 'real' base station such a pico or macro eNB.

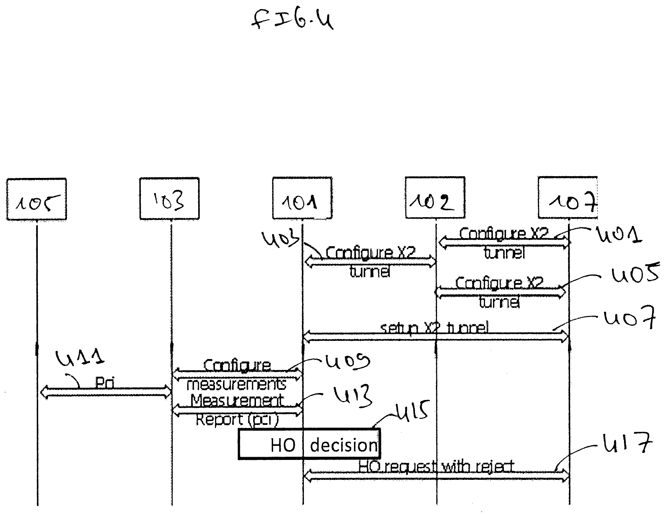

Fig. 4 is a signaling diagram illustrating a further exemplary process of counting handovers toward the first test base station 105. The ECGI of eNBs in the neighborhood (e.g. the serving eNB 101) of the first test base station 105 are provided to the second test base station 107 e.g. by a user of the second test base station 107.
These ECGI may be used to setup and maintain X2 tunnel setup to these neighborhood eNB. For example, in step 401, the second test base station 107 may trigger a X2 tunnel setup via the MME 102 to get the configuration data for the serving eNB 101 (steps 403-405). The second test base station 107 may perform step 401 in preparation of the process of determining an optimal installation area of a base station within a communication system e.g. 100. The X2 tunnel setup is concluded by the two endpoints (i.e. the serving eNB 101 and second test base station 107) setting up their individual X2 tunnel (step 407). In this way, the serving eNB 101 may have access to the PCI of the first cell served by the first test base station 105, which is the same as the PCI associated to the second test base station. Further, the serving eNB 101 may store information that associate the PCI and a signaling channel identifier of the signaling channel to the second test base station 107. The steps 401-407 may be optionally repeated periodically to keep the association PCI to signaling tunnel association in the neighbor list of the serving eNB 101.

The serving eNB 101 transmits measurement configuration information to the UE 103 (step 409). This may be done for example in an RRC Connection Request message. For example, the serving eNB 101 may configure the UE 103 to perform the PCI measurements using received signals from other base stations such as the first test base station 105. The UE 103 may perform PCI measurements on received data from the first test base station 105 (step 411). The UE 103 may send a measurement report indicative of the performed measurement ((including the PCI of a first cell served by the first test base station 105) to the serving eNB (step 413). The serving eNB 101 makes a handover decision based on the measurement report (step 415). Since the received PCI is known to the serving eNB 101 and associated to the signaling channel linking the serving eNB 101 to the second test base station 107, the serving eNB 101 knows the communication endpoint to forward the handover request. Thus, in step 417, the serving eNB 101 sends a handover request to the second test base station 107.

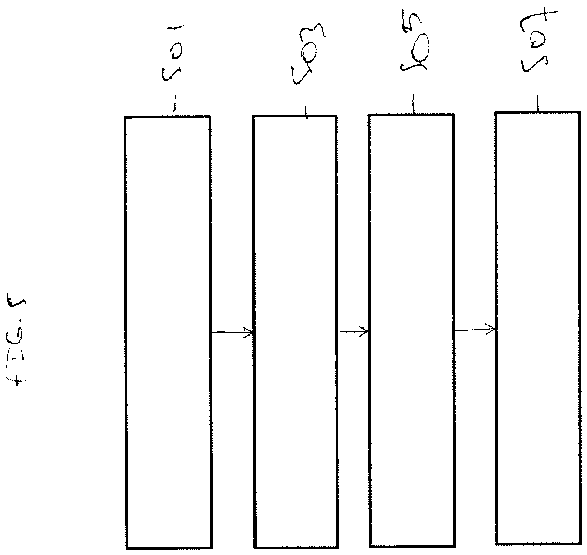

Fig. 5 flowchart for a method for installing a base station in a mobile communication system comprising a serving base station. A first and second communication device are provided, wherein the first communication device is configured for broadcasting data, wherein the second communication device is configured for receiving data from the serving base station, wherein the first and second communication devices are installed in a first and second installation area relative to the serving base station respectively. In step 501, the serving base station receives a measurement report message from a mobile station being served by the serving base station and moving toward the first communication device, wherein the measurement report message comprises measurements by the mobile station on the broadcasted data. In step 503 the serving base station evaluates the measurements and makes a handover decision towards the second communication device, thereby it sends a handover request to the second communication device. In step 505, upon receiving the handover request from the serving base station a first number of received handovers is incremented at the second communication device and the handover request is rejected. In step 507, the first installation area is determined for installing the base station based on the first number of handovers obtained during a predefined time period.

### List of reference numerals

100 communication system,
101 serving eNB
102 MME
103 UE
105 first test base station
107 second test base station
109 backhaul network
111 air interface
201 control unit
202 radio communication unit
204 antenna
206 transmitter
213 CPU
215 memory
219 line interface
221 handover receiving unit
223 handover processing unit
225 control unit
227 neighbour cell list updating unit
229 CPU
231 memory.

## Claims

1. A method for installing a base station in a mobile communication system (100) comprising a serving base station (101), the method comprising:
a. providing a first and second communication device (105 , 107), wherein the first communication device (105) is configured for broadcasting data, wherein the second communication device (107) is configured for receiving data from the serving base station (101), wherein the first and second communication devices (105, 107) are installed in a first and second installation area relative to the serving base station (101) respectively;
b. receiving, by the serving base station (101), a measurement report message from a mobile station (103) being served by the serving base station (101), wherein the measurement report message comprises measurements by the mobile station (103) on the broadcasted data;
c. evaluating, by the serving base station (101), the measurements and making a handover decision towards the second communication device (107), thereby sending a handover request to the second communication device (107);
d. upon receiving the handover request from the serving base station (101) incrementing at the second communication device (107) a first number of received handovers and rejecting the handover request;
e. determining by a control unit of the mobile communication system (100) the first installation area for installing the base station based on the first number of handovers obtained during a predefined time period.

2. The method of claim 1, further comprising providing the first communication device (105) as a first test base station comprising a transmitter (206) for broadcasting the data in a first frequency band, wherein the transmitter characteristics of the first test base station comprise at least part of the transmitter characteristics of the base station.

3. The method of claim 1 or 2, further comprising providing the second communication device (107) as a second test base station that is physically connected to the serving base station (101) through a backhaul network (109).

4. The method of claim 2, wherein the first frequency band comprises at least part of a frequency band of the serving base station (101).

5. The method of any of the preceding claims, wherein the broadcasted data is indicative of at least one of a Physical Cell ID, PCI, and a E-UTRAN cell Global ID, ECGI, of a first cell served by the first communication device (105).

6. The method of any of the preceding claims, further comprising
- determining, by the serving base station (101), a signaling channel to the second communication device (107); and
- establishing an X2 interface between the serving base station (101) and the second communication device (107) using the determined signaling channel, wherein the second communication device (107) is configured for receiving the handover request over the X2 interface.

7. The method of claim 6, wherein the signaling channel is determined using a neighbor cell list of the serving base station (101), wherein the neighbor cell list comprises an indication of the signaling channel to the second communication device (107) in association with the PCI of the first cell.

8. The method of claim 6, wherein determining the signaling channel comprises:
- sending, by the serving base station (101), a request to a network element (102) of the mobile communication system (100) for obtaining an identifier of a target base station for the handover, wherein the request is indicative of the ECGI of the first cell;
- receiving, by the serving base station (101), an indication of the signaling channel to the second communication device (107) corresponding to the ECGI.

9. The method of any of preceding claims, further comprising:
- repeating steps b) to d) for a third installation area in which the first communication device (105) is installed, resulting in a second number of received handovers; wherein determining the installation area further comprises comparing the first number of handovers with the second number of handovers during the predefined time period and determining one of the first installation area and the third installation area based on the comparison result.

10. The method of any of preceding claims, wherein the first number of handovers is incremented for different mobile stations.

11. A mobile communication system (100) comprising:
- a first communication device (105) for broadcasting data;
- a serving base station (101) adapted for:
• receiving a measurement report message from a mobile station (103) being served by the serving base station (101), wherein the measurement report message comprises measurements on the broadcasted data performed by the mobile station (103);
• evaluating the measurements and making a handover decision towards the second communication device (107); and
• sending a handover request to the second communication device (107).
- a second communication device (107) adapted for
• receiving the handover request from the serving base station (101);
• incrementing a first number of received handovers; and
• rejecting the handover request;
wherein the first and second communication devices (105, 107) are installed in a first and second installation area relative to the serving base station (101) respectively, and
- a control unit for determining an installation area as the first installation area for installing the base station based on the first number of handovers obtained during a predefined time period.

12. A first communication device (105) for use in the mobile communication system (100) of claim 11.

13. A second communication device (107) for use in the mobile communication system (100) of claim 11.

14. A computer program product comprising computer executable instructions which, when said instructions are executed by a processor (213) of a first communication device (105) according to claim 12 or by a processor (229) of a second communication device (107) according claim 13, cause the processor (213) of the first communication device (105) or the processor (229) of the second communication device (107), respectively, to carry out the corresponding method steps of any one of the preceding claims 1-10.

## Patentansprüche

1. Verfahren zum Installieren einer Basisstation in einem Mobilfunkkommunikationssystem (100), umfassend eine dienende Basisstation (101), wobei das Verfahren umfasst:
a. Bereitstellen einer ersten und zweiten Kommunikationsvorrichtung (105,107), wobei die erste Kommunikationsvorrichtung (105) zum Senden von Daten konfiguriert ist, wobei die zweite Kommunikationsvorrichtung (107) zum Empfangen von Daten von der dienenden Basisstation (101) konfiguriert ist, wobei die erste und die zweite Kommunikationsvorrichtung (105, 107) jeweils in einem ersten und zweiten Installationsbereich relativ zur dienenden Basisstation (101) installiert sind;
b. Empfangen, durch die dienende Basisstation (101), einer Messberichtsnachricht von einer Mobilfunkstation (103), die von der dienenden Basisstation (101) bedient wird, wobei die Messberichtsnachricht Messungen durch die Mobilfunkstation (103) an den gesendeten Daten umfasst;
c. Beurteilen der Messungen durch die dienende Basisstation (101) und Durchführen einer Entscheidung zur Übergabe an die zweite Kommunikationsvorrichtung (107), wodurch eine Übergabeanforderung an die zweite Kommunikationsvorrichtung (107) gesendet wird;
d. nach dem Empfangen der Übergabeanforderung von der dienenden Basisstation (101) Erhöhen einer ersten Anzahl empfangener Übergaben und Zurückweisen der Übergabeanforderung an der zweiten Kommunikationsvorrichtung (107);
e. Bestimmen des ersten Installationsbereichs zum Installieren der Basisstation aufbauend auf der ersten Anzahl von Übergaben, die während eines vorgegebenen Zeitraums erlangt wurde, durch eine Steuereinheit des Mobilfunkkommunikationssystems (100).

2. Verfahren nach Anspruch 1, ferner umfassend Bereitstellen der ersten Kommunikationsvorrichtung (105) als eine erste Testbasisstation, umfassend einen Sender (206) zum Senden der Daten in einem ersten Frequenzband, wobei die Sendercharakteristiken der ersten Testbasisstation wenigstens einen Teil der Sendercharakteristiken der Basisstation umfassen.

3. Verfahren nach Anspruch 1 oder 2, ferner umfassend Bereitstellen der zweiten Kommunikationsvorrichtung (107) als eine zweite Testbasisstation, die durch ein Backhaul-Netz (109) physisch mit der dienenden Basisstation (101) verbunden ist.

4. Verfahren nach Anspruch 2, wobei das erste Frequenzband wenigstens einen Teil eines Frequenzbands der dienenden Basisstation (101) umfasst.

5. Verfahren nach einem beliebigen der vorstehenden Ansprüche, wobei die gesendeten Daten wenigstens eins von einer physischen Zellkennung, PCI, und einer globalen E-UTRAN-Zellkennung, ECGI, einer ersten Zelle angeben, die von der ersten Kommunikationsvorrichtung (105) bedient wird.

6. Verfahren nach einem beliebigen der vorstehenden Ansprüche, ferner umfassend
- Bestimmen eines Signalisierungskanals an die zweite Kommunikationsvorrichtung (107) durch die dienende Basisstation (101); und
- Herstellen einer X2-Schnittstelle zwischen der dienenden Basisstation (101) und der zweiten Kommunikationsvorrichtung (107) unter Verwendung des bestimmten Signalisierungskanals, wobei die zweite Kommunikationsvorrichtung (107) dazu konfiguriert ist, die Übergabeanforderung über die X2-Schnittstelle zu empfangen.

7. Verfahren nach Anspruch 6, wobei der Signalisierungskanal unter Verwendung einer Nachbarzellliste der dienenden Basisstation (101) bestimmt wird, wobei die Nachbarzellliste eine Angabe des Signalisierungskanals an die zweite Kommunikationsvorrichtung (107) in Verbindung mit der PCI der ersten Zelle umfasst.

8. Verfahren nach Anspruch 6, wobei das Bestimmen des Signalisierungskanals umfasst:
- Senden einer Anforderung an ein Netzelement (102) des Mobilfunkkommunikationssystems (100) zum Erlangen einer Kennung einer Zielbasisstation für die Übergabe durch die dienende Basisstation (101), wobei die Anforderung die ECGI der ersten Zelle angibt;
- Empfangen einer Angabe des Signalisierungskanals an die zweite Kommunikationsvorrichtung (107) entsprechend der ECGI durch die dienende Basisstation (101).

9. Verfahren nach einem beliebigen der vorstehenden Ansprüche, ferner umfassend:
- Wiederholen der Schritte b) bis d) für einen dritten Installationsbereich, in dem die erste Kommunikationsvorrichtung (105) installiert ist, was eine zweite Anzahl empfangener Übergaben ergibt; wobei das Bestimmen des Installationsbereichs ferner das Vergleichen der ersten Anzahl von Übergaben mit der zweiten Anzahl von Übergaben während des vorgegebenen Zeitraums und das Bestimmen von einem von dem ersten Installationsbereich und dem dritten Installationsbereich aufbauend auf dem Vergleichsergebnis umfasst.

10. Verfahren nach einem beliebigen der vorstehenden Ansprüche, wobei die erste Anzahl von Übergaben für unterschiedliche Mobilfunkstationen erhöht wird.

11. Mobilfunkkommunikationssystem (100), umfassend:
- eine erste Kommunikationsvorrichtung (105) zum Senden von Daten;
- eine dienende Basisstation (101), die ausgebildet ist zum:
• Empfangen einer Messberichtsnachricht von einer Mobilfunkstation (103), die von der dienenden Basisstation (101) bedient wird, wobei die Messberichtsnachricht von der Mobilfunkstation (103) durchgeführte Messungen an den gesendeten Daten umfasst;
• Beurteilen der Messungen und Treffen einer Entscheidung der Übergabe an die zweite Kommunikationsvorrichtung (107); und
• Senden einer Übergabe-Anforderung an die zweite Kommunikationsvorrichtung (107),
- eine zweite Kommunikationsvorrichtung (107), die ausgebildet ist zum
• Empfangen der Übergabeanforderung von der dienenden Basisstation (101);
• Erhöhen einer ersten Anzahl empfangener Übergaben; und
• Zurückweisen der Übergabeanforderung;
wobei die erste und die zweite Kommunikationsvorrichtung (105, 107) jeweils in einem ersten und zweiten Installationsbereich relativ zur dienenden Basisstation (101) installiert sind und
- eine Steuereinheit zum Bestimmen eines Installationsbereichs als den ersten Installationsbereich zum Installieren der Basisstation aufbauend auf der ersten Anzahl von Übergaben, die während eines vorgegebenen Zeitraums erlangt wurde.

12. Erste Kommunikationsvorrichtung (105) zur Verwendung in dem Mobilfunkkommunikationssystem (100) nach Anspruch 11.

13. Zweite Kommunikationsvorrichtung (107) zur Verwendung in dem Mobilfunkkommunikationssystem (100) nach Anspruch 11.

14. Computerprogrammprodukt, umfassend von einem Computer ausführbare Anweisungen, die, wenn die Anweisungen von einem Prozessor (213) einer ersten Kommunikationsvorrichtung (105) nach Anspruch 12 oder einem Prozessor (229) einer zweiten Kommunikationsvorrichtung (107) nach Anspruch 13 ausgeführt werden, jeweils den Prozessor (213) der ersten Kommunikationsvorrichtung (105) oder den Prozessor (229) der zweiten Kommunikationsvorrichtung (107) veranlassen, die entsprechenden Verfahrensschritte nach einem beliebigen der vorstehenden Ansprüche 1-10 auszuführen.

## Revendications

1. Procédé d'installation d'une station de base dans un système de communication mobile (100) comprenant une station de base de desserte (101), le procédé comprenant les étapes suivantes :
a. fournir un premier et un deuxième dispositif de communication (105, 107), le premier dispositif de communication (105) étant configuré pour diffuser des données, le deuxième dispositif de communication (107) étant configuré pour recevoir des données en provenance de la station de base de desserte (101), le premier et le deuxième dispositifs de communication (105, 107) étant installés dans une première et une deuxième zones d'installation relatives à la station de base de desserte (101) respectivement ;
b. recevoir, par la station de base de desserte (101), un message de rapport de mesure en provenance d'une station mobile (103) desservie par la station de base de desserte (101), le message de rapport de mesure contenant des mesures effectuées par la station mobile (103) sur les données diffusées ;
c. évaluer, par la station de base de desserte (101), les mesures et prendre une décision de transfert intercellulaire vers le deuxième dispositif de communication (107), envoyant ainsi une demande de transfert intercellulaire au deuxième dispositif de communication (107) ;
d. à la réception de la demande de transfert intercellulaire en provenance de la station de base de desserte (101) incrémenter au niveau du deuxième dispositif de communication (107) un premier nombre de transferts intercellulaires reçus et rejeter la demande de transfert intercellulaire ;
e. déterminer par un organe de commande du système de communication mobile (100) la première zone d'installation pour installer la station de base d'après le premier nombre de transferts intercellulaires obtenus pendant un intervalle de temps prédéfini.

2. Procédé selon la revendication 1, comprenant en outre la mise à disposition du premier dispositif de communication (105) en tant que première station de base de test comprenant un émetteur (206) destiné à diffuser les données dans une première bande de fréquence, les caractéristiques de l'émetteur de la première station de base de test comprenant au moins une partie des caractéristiques de l'émetteur de la station de base.

3. Procédé selon la revendication 1 ou 2, comprenant en outre la mise à disposition du deuxième dispositif de communication (107) en tant que deuxième station de base de test qui est physiquement connectée à la station de base de desserte (101) via un réseau de transport arrière (109).

4. Procédé selon la revendication 2, dans lequel la première bande de fréquence comprend au moins une partie de la bande de fréquence de la station de base de desserte (101).

5. Procédé selon l'une quelconque des revendications précédentes, dans lequel les données diffusées indiquent au moins un élément parmi un identifiant de cellule physique, PCI, et un identifiant global de cellule E-UTRAN, ECGI, d'une première cellule desservie par le premier dispositif de communication (105).

6. Procédé selon l'une quelconque des revendications précédentes, comprenant en outre les étapes suivantes :
- déterminer, par la station de base de desserte (101), un canal de signalisation vers le deuxième dispositif de communication (107) ; et
- établir une interface X2 entre la station de base de desserte (101) et le deuxième dispositif de communication (107) en utilisant le canal de signalisation déterminé, le deuxième dispositif de communication (107) étant configuré pour recevoir la demande de transfert intercellulaire sur l'interface X2.

7. Procédé selon la revendication 6, dans lequel le canal de signalisation est déterminé à l'aide d'une liste de cellules voisines de la station de base de desserte (101), la liste de cellules voisines comprenant une indication du canal de signalisation vers le deuxième dispositif de communication (107) en association avec le PCI de la première cellule.

8. Procédé selon la revendication 6, dans lequel la détermination du canal de signalisation comprend les étapes suivantes :
- envoyer, par la station de base de desserte (101), une demande à un élément de réseau (102) du système de communication mobile (100) pour obtenir un identifiant d'une station de base cible pour le transfert intercellulaire, la demande indiquant l'ECGI de la première cellule ;
- recevoir, par la station de base de desserte (101), une indication du canal de signalisation vers le deuxième dispositif de communication (107) correspondant à l'ECGI.

9. Procédé selon l'une quelconque des revendications précédentes, comprenant en outre les étapes suivantes :
- répéter les étapes b) à d) pour une troisième zone d'installation dans laquelle le premier dispositif de communication (105) est installé, conduisant à un deuxième nombre de transferts intercellulaires reçus ; dans lequel la détermination de la zone d'installation comprend en outre la comparaison du premier nombre de transferts intercellulaires avec le deuxième nombre de transferts intercellulaires pendant l'intervalle de temps prédéfini et la détermination d'une zone parmi la première zone d'installation et la troisième zone d'installation d'après le résultat de la comparaison.

10. Procédé selon l'une quelconque des revendications précédentes, dans lequel le premier nombre de transferts intercellulaires est incrémenté pour des stations mobiles différentes.

11. Système de communication mobile (100) comprenant :
- un premier dispositif de communication (105) destiné à diffuser des données ;
- une station de base de desserte (101) adaptée pour :
• recevoir un message de rapport de mesure en provenance d'une station mobile (103) desservie par la station de base de desserte (101), le message de rapport de mesure contenant des mesures sur les données diffusées réalisées par la station mobile (103) ;
• évaluer les mesures et prendre une décision de transfert intercellulaire vers le deuxième dispositif de communication (107) ; et
• envoyer une demande de transfert intercellulaire au deuxième dispositif de communication (107) ;
- un deuxième dispositif de communication (107) adapté pour
• recevoir la demande de transfert intercellulaire en provenance de la station de base de desserte (101) ;
• incrémenter un premier nombre de transferts intercellulaires reçus ; et
• rejeter la demande de transfert intercellulaire ;
dans lequel le premier et le deuxième dispositifs de communication (105, 107) sont installés dans une première et une deuxième zones d'installation relatives à la station de base de desserte (101) respectivement ; et
- un organe de commande destiné à déterminer une zone d'installation en tant que première zone d'installation pour installer la station de base d'après le premier nombre de transferts intercellulaires obtenus pendant un intervalle de temps prédéfini.

12. Premier dispositif de communication (105) destiné à une utilisation dans le système de communication mobile (100) selon la revendication 11.

13. Deuxième dispositif de communication (107) destiné à une utilisation dans le système de communication mobile (100) selon la revendication 11.

14. Produit-programme informatique comprenant des instructions exécutables sur un ordinateur qui, lorsque lesdites instructions sont exécutées par un processeur (213) d'un premier dispositif de communication (105) selon la revendication 12 ou par un processeur (229) d'un deuxième dispositif de communication (107) selon la revendication 13, commandent au processeur (213) du premier dispositif de communication (105) ou au processeur (229) du deuxième dispositif de communication (107), respectivement, de mettre en oeuvre les étapes de procédé correspondantes selon l'une quelconque des revendications 1 à 10.
